# EUROPEAN PATENT APPLICATION

(11) **EP 1 770 943 A1**
(43) Date of publication of application: **04.04.2007**
(21) Application number: 05292045.1
(22) Date of filing: 30.09.2005
(51) Int. Cl.: H04L 29/06, H04L 12/58

(54) **Method and system for an e-mail service in communication networks**

(71) Applicant: France Telecom S.A., 75015 Paris (FR)
(72) Inventor: Giszczak, Tomasz, London W4 4EA (GB)

(57) **Abstract**

For downloading e-mails into a mobile node (50) of a communication network comprising different core networks, one of them being available to provide an active interface for establishing a connection of said mobile node with an e-mail server (18) in said communication network, the system comprises an e-mail client (51) arranged for checking if the active interface is provided by a high speed or a low speed core network, and for requiring the server to transmit e-mails without their attachments in the case of a low speed network and with their attachments in the case of a high speed network.

## Description

The present invention relates to a method and system for e-mail service in communication networks and more particularly in heterogeneous networks. Usually, when a mobile node is affiliated to a wireless network like a radio cellular network, the mobile node can execute handovers inside the access network of the radio cellular network with purpose of maintaining an acceptable quality of an established communication. Many wireless networks of different technologies may coexist near one another and a mobile node can change its affiliation from a network to another one for providing of a communication.

The patent application EP1435748 discloses a system for adaptation application following a handover between wireless networks of different capabilities. When a mobile terminal changes its affiliation from one access network to another, information representing this change is made available by a mobility manager to an application server. Receiving this information, the application server negotiates a change of service with the mobile terminal in accordance with the change of affiliation.

The patent application WO03/047296 discloses a mobility manager designed to determine with which access point a mobile transceiver should set up a communication and which access point is more appropriate for a change when necessary. A list of nearby access points is provided by the mobility manager to the mobile transceiver so as to measure a quality of transmission with the access points of the list when the quality of transmission with a current access point falls under a threshold. The list of nearby access points can be established according to environmental information relative to the mobile node at which the list is aimed.

The patent US6,647,409 discloses a handheld computing system that selectively retrieves items, such as e-mails, from a server. The retrieval is based on predetermined criteria, such as predetermined date, size or keyword information. Because of criteria being predetermined, there is no possibility to adapt the retrieval of items in real time according to a current availability of access network. Only items that satisfy a predetermined criteria, are downloaded.

A first object of the invention is a method for downloading e-mails into a mobile node of a communication network comprising different core networks, one of them being available to provide an active interface for establishing a connection of said mobile node with an e-mail server in said communication network. The method comprises:
- a check step for checking if the active interface is provided by a high speed or a low speed core network;
- a fetch step for requiring the server to transmit e-mails without their attachments in the case of a low speed network and with their attachments in the case of a high speed network.

Therewith, an e-mail message can always be downloaded, in totality or in part, in a way that is compatible with a bandwidth allowed by an access network to which the mobile node is connected.

Advantageously in the method:
- when requiring transmitting e-mails without their attachments in the fetch step, an e-mail which is transmitted without its attachment is referenced in a register;
- when requiring transmitting e-mails with their attachments in the fetch step, an e-mail which is referenced in the register is retransmitted with its attachment.

In that way, a message previously transmitted without its attachment because of low bandwidth of the available core network at that time, can later be downloaded with its attachment when a future core networks provides for a larger bandwidth.

Particularly in the check step, the active interface is checked by a dialog between an e-mail client and a mobile IP client. Because aware of the capability of the current core network, the mobile IP client is suited for determining a transfer speed of the active interface.

By executing the check step when a change of core network is detected for providing the active interface, it is possible to readapt the downloading of messages according to the real time current available bandwidth.

An other object of the invention is a system for downloading e-mails into a mobile node of a communication network comprising different core networks, one of them being available to provide an active interface for establishing a connection of said mobile node with an e-mail server in said communication network. The system comprising an e-mail client arranged for checking if the active interface is provided by a high speed or a low speed core network, and for requiring the server to transmit e-mails without their attachments in the case of a low speed network and with their attachments in the case of a high speed network.

Advantageously the system according comprises a register for referencing an e-mail which is transmitted without its attachment so as to require a retransmission of said e-mail with its attachment when the core network is high speed network.

Particularly the system comprises a mobile IP client arranged for sending to the e-mail client a speed value of a current core network providing the active interface in response to a request from the e-mail client for checking said active interface.

When the mobile IP client is arranged to send to the e-mail client a signal detecting a change of core network for providing the active interface, the e-mail client can check the active interface for determining the best suited way of downloading messages.

A further object of the invention is a program for an e-mail client to be implemented in a mobile node of a communication network. The program comprises instructions for:
- checking if an active interface is provided by a high speed or a low speed core network of the communication network for establishing a connection of said mobile node with an e-mail server in said communication network;
- requiring the server to transmit e-mails without their attachments in the case of a low speed network and with their attachments in the case of a high speed network.

Particularly the program comprises instructions for:
- referencing in a register an e-mails transmitted without its attachment;
- requiring a retransmission of said e-mail with its attachment when the active interface is provided by a high speed core network.

Such a program is suited for implementing the method and for arranging means of the system according to the invention.

Embodiments of the present invention will now be described by way of example only with reference to the accompanying drawings, where like parts are provided with corresponding reference numerals, and in which:
Figure 1 is a schematic representation of a telecommunication network wherein can be implemented the present invention;
Figure 2 is a block diagram of a system according to the invention;
Figure 3 shows steps of a method implemented in an email client according to the invention;
Figure 4 shows steps of a method implemented in an mobile IP client according to the invention; and
Figure 5 shows steps of a method implemented in an email server according to the invention.

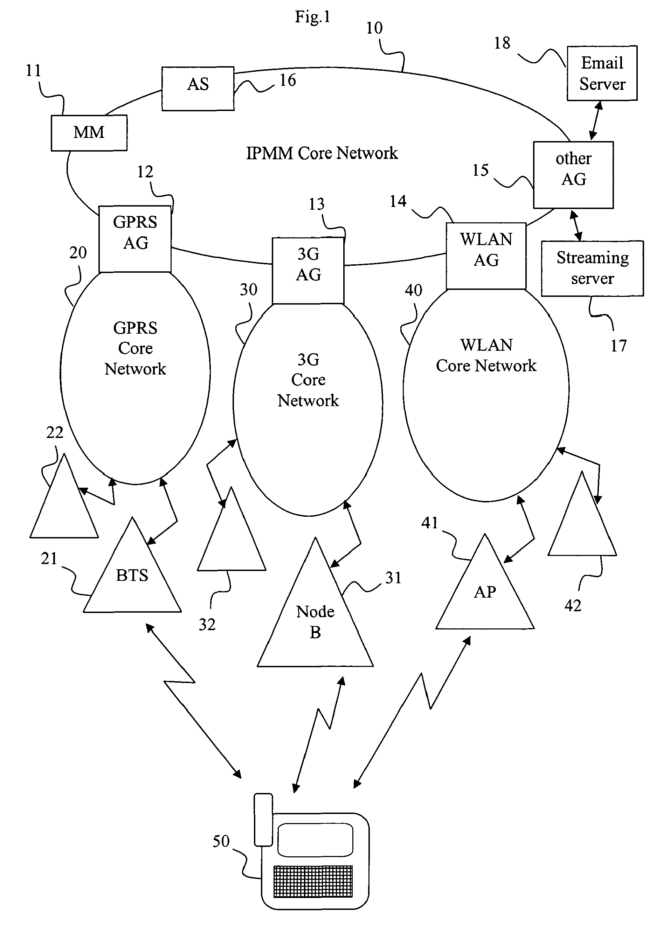

Figure 1 shows a general architecture for IP Mobility Management (IPMM) that aims at providing users with seamless mobility. An IPMM core network 10 comprises at least one mobility manager 11 (MM) and two or more access gateways (AG) located each between the IPMM core network and another core network wherewith a mobile node 50 is arranged to communicate.

For example, an access gateway 12 is located between the core network 10 and a core network 20 arranged to provide general packet radio service (GPRS). Currently, the gateway 12 is a gateway GPRS support node (GGSN). The core network 20 manages an access network comprising base transceiver stations (BTS) 21, 22 assigned to different cells, separately identified to distinguish them in the access network. On figure 1, radio coverage of BTS 21 allows the establishment of a down link from the core network 20 to the mobile node 50 and of an up link from the mobile node 50 to the core network 20.

For example again, an access gateway 14 is located between the core network 10 and a core network 40 that is a wireless local area network (WLAN). The core network 40 manages an access network comprising access points (AP) 41, 42 assigned to different cells, separately identified to distinguish them in the access network. On figure 1, radio coverage of AP 41 allows the establishment of a down link from the core network 40 to the mobile node 50 and of an up link from the mobile node 50 to the core network 40. Currently, the gateway 14 collects congestion information from the access points, processes said information and sends it to the mobility manager 11.

Other access gateways 15 can be located between the core network 10 and other core networks like for example an access gateway 13 being located between the core network 10 and a core network 30 arranged to provide third generation radio service (3G). In universal mobile telecommunication system (UMTS), the core network manages an access network comprising nodes B 31, 32 assigned to different cells, separately identified to distinguish them in the access network. On figure 1, radio coverage of Node B 31 allows the establishment of a down link from the core network 30 to the mobile node 50 and of an up link from the mobile node 50 to the core network 30.

The mobility manager 11 is arranged for being aware of current access network and future access network changes relating to mobile nodes that are registered in its domain. The mobility manager 11 comprises means for receiving report messages from mobile nodes which provide information about the Access network with which the mobile node is affiliated and also other access networks providing coverage within which the mobile node may communicate. The mobility manager uses information concerning the current affiliation of a mobile node and information received from the network to direct a handover of that mobile node to another network or another access node in the same network.

The IPMM core network comprises also an application server 16 (AS) that is arranged for interfacing with the IPMM mobility manager 11 with purpose of identifying a need for adaptation of applications running with the mobile node 50. The application server 16 is arranged to adapt an application according to quality of service (QoS) levels available on the access network currently used or usable for communication with the mobile node 50 in a context of the application. Servers like a steaming server 17 or an email server 18 can be connected to the IPMM core network for providing services to the mobile node 50.

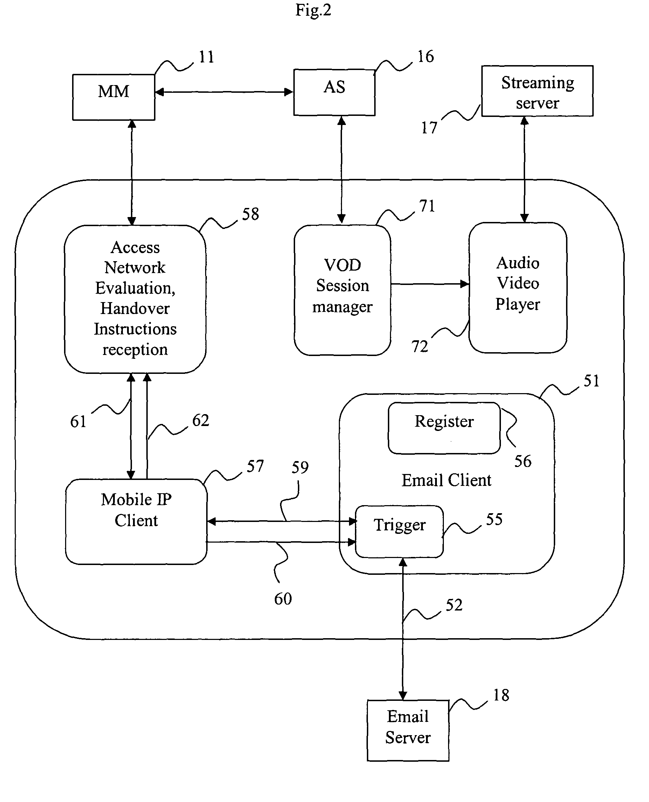

A system according to the invention is now described with reference to figure 2 wherein the mobile node 50 is designed for communicating with the email server 18 by mean of an email client 51 which can be linked by a connection 52 to the email server via the core network.

The email client 51 is provided for receiving and transmitting messages comprising e-mails respectively from and to the server 18. Received e-mails can be displayed and transmitted e-mails can be typed respectively on a screen 53 and on a keyboard 54 of the mobile node 50.

The e-mails messages are transmitted and particularly received at a speed that depends of an active interface provided by the bandwidth of the current access network on an up link and particularly on a down link to the mobile node 50 at the time the email client 51 exchanges messages with the e-mail server 18. For example core networks 20 and 30 are considered to provide for a low speed networks and the core network 40 is considered to provide for a high speed network because a WLAN core network has generally a higher bandwidth than a GPRS or even a 3G core network.

An e-mail message includes generally a text part and sometimes or frequently an attachment. The reception of an e-mail including an attachment can take a relative long time when the down link is threw a low speed network, particularly when the attachment is voluminous. The reception of an e-mail without attachment takes a relative short time. Therefore a choice of downloading e-mails with or without attachment according to the speed of the network would be helpful.

The mobile node 50 comprises a mobile IP client 57 that is arranged to work in cooperation with a component 58 for implementing for example a mobile IP protocol. The component 58 is connected with the mobility manager 11 for evaluation of the access network and reception of handover instructions. The mobile IP client comprises a mobile IP stack referencing the active network. The mobile IP stack is updated according to a network change order dialogue 61 with the component 58 or according to a spontaneous change of active network interface signal 62 sent to the component 58 by the mobile IP client 57.

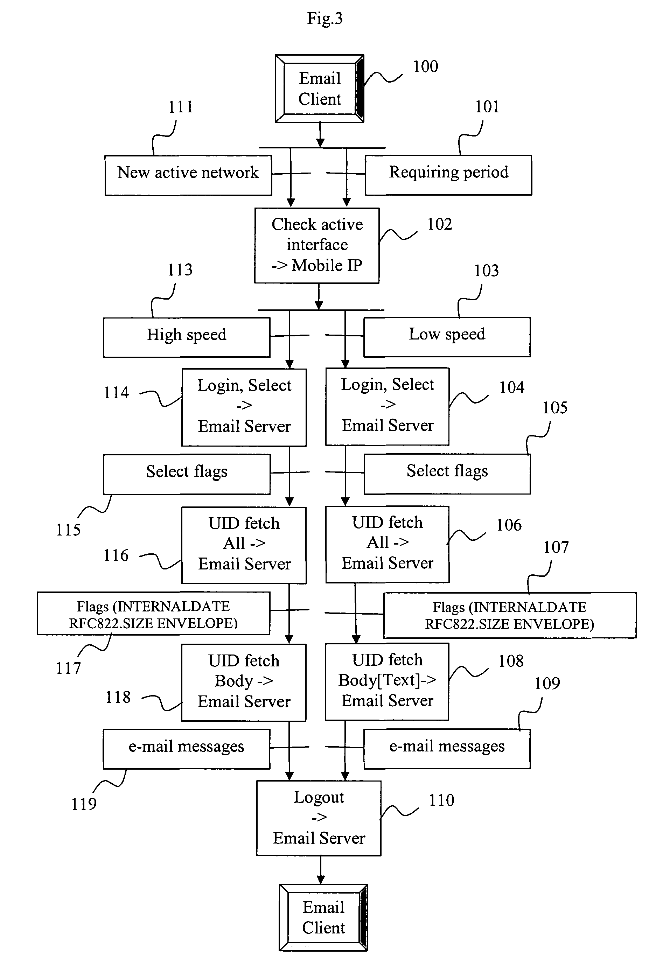

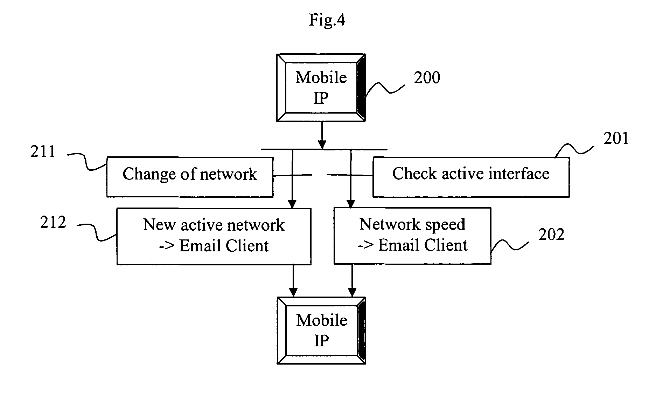

Advantageously, the email client 51 comprises a trigger 55 arranged for requiring an active interface checking 59 and for receiving a change of active network interface signal 60 from the mobile IP client 57. The arrangement of the trigger 55 is made by program instructions that implement steps and transitions 101, 102, 103, 11 and 113 of a method later described with reference to figure 3. Correlatively, program instructions that implement steps and transitions 200, 201, 202, 211 and 212 of the method later described with reference to figure 4, are plugged in the Mobile IP stack.

The email client 51 is further provided with program instructions that implement an internet message access protocol allowing partial or complete transfer of e-mail messages like the one described for example in the request for comments RFC 3501 version 4rev1 accessible on the Internet at the address http://www.faqs.org. A register 56 is provided for referencing e-mails which have been transmitted without their attachments. In the e-mail client 51, program instructions implementing steps and transitions 103 to 110 and 113 to 119 of the method later described with reference to figure 3, allow downloading of messages from the server 18 with or without their attachment according to signals received from the mobile IP client 57.

The mobile node 50 comprises also other components like for example a VOD session manager 71 connected to the application server 16 and an audio video player 72 connected to the streaming server 17.

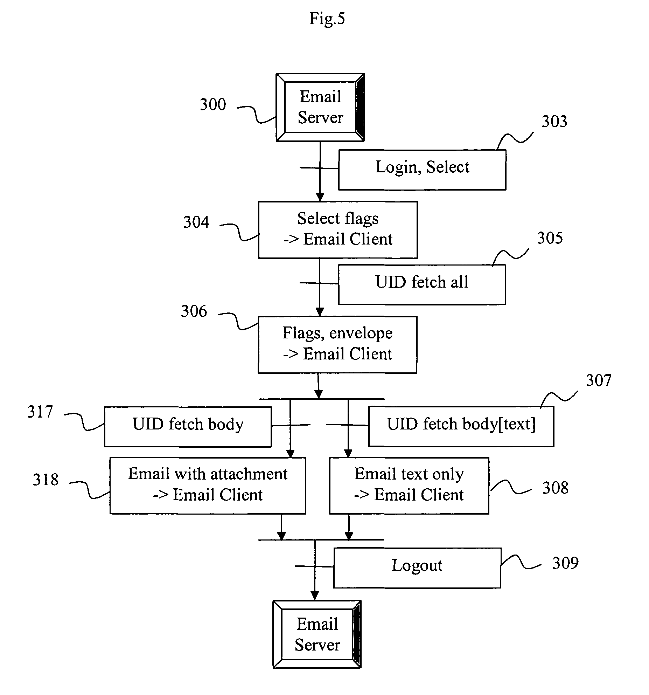

A method according to the invention is now described with reference to figures 3 to 5.

In a step 102, the e-mail client requires the mobile IP client 57 to check the active interface. From an initial step 100 of the email client, the step 102 is activated when a transition 111 or a transition 101 is validated. The transition 101 is validated at each expiration of a requiring period for downloading messages from the email server 18 or at starting of the email client. The transition 111 is validated by a reception of the signal 60 from the mobile IP client which detects a new active network.

In a step 212, the mobile IP client 57 sends the signal 60 of new active network to the email client 51. From an initial step 200 of the mobile IP client, the step 212 is activated when a transition 211 is validated by a change of network detection resulting from the dialog 61 or the signal 62. After execution of step 212, the mobile IP client returns in the initial step 200.

In a step 202, the mobile IP client read in the mobile IP stack if the active network is a high speed or a low speed one and sends the network speed to the email client. From the initial step 200 of the mobile IP client, the step 202 is activated when a transition 201 is validated by reception of the request 59 from the email client 51. After execution of step 202, the mobile IP client returns in the initial step 200.

In the email client, a transition 103 is validated by a reception of network speed from the mobile IP client indicating a low speed network and a transition 113 is validated by a reception of network speed from the mobile IP client indicating a high speed network. A validation of transitions 103, 113 at the end of step 102 activates respectively a step 104, 114 wherein the email client 51 login to the email server 18 with a user pass and selects therein an inbox wherefrom to download received e-mails. In each mailbox of the e-mail server, each e-mail message has a Unique Identifier (UID). As each message is added to the mailbox it is assigned a higher UID value than the messages which were added previously.

The email client being in an initial step 300, a transition 303 is validated by reception of the login and of a reference of the selected inbox. The validation of the transition 303 activates a step 304 wherein the email server requires the email client to select flags like EXISTS, RECENT, UNSEEN... according to the RFC 3501.

A reception of the select flag request from the email server in the email client validates a transition 105, 115 that activates a step 106, 116 respectively after the step 104, 114. In the step 106, 116 the email server sends to the client information about all the messages in the mailbox, such as its internal date, size, and envelope structure of the message and unique identifier (UID).

A reception of the result of UID fetch all command validates a transition 305 that activates a step 306 after the step 304. In the step 306 email server sends to the client information about all the messages in the mailbox, such as its internal date, size, and envelope structure of the message and unique identifier (UID). This data allow distinguishing one message from another.

A reception of the flags describing the message and its unique identifier from the email server in the email client validates a transition 107, 117 that activates a step 108, 118 respectively after the step 106, 116.

In the step 108 that is activated after validation of transition 103 relating to a low speed network, the e-mail client requires the server to transmit e-mails without their attachments, i.e. to fetch only text in the body of an e-mail identified by its UID. The UID of each e-mail required being transmitted without attachment, is referenced in the register 56.

A reception in the server of the request sent in step 108 validates a transition 307 that activates a step 308 wherein an e-mail is sent with only its text part to the e-mail client.

In the step 118 that is activated after validation of transition 113 relating to a high speed network, the e-mail client requires the server to transmit e-mails with their attachments, i.e. to fetch text and attachment in the body of an e-mail identified by its UID. Messages with an UID referenced in the register 56 are required at the same time.

A reception in the server of the request sent in step 118 validates a transition 317 that activates a step 318 wherein an e-mail is sent with its text part and its attachment to the e-mail client.

Reception of messages in the e-mail client validates a transition 109, 119 that activates a step 110 wherein the e-mail client logout from the e-mail server.

Reception of logout in the e-mail server validates a transition 309 that replace the e-mail server in the initial step.

## Claims

1. A method for downloading e-mails into a mobile node of a communication network comprising different core networks, one of them being available to provide an active interface for establishing a connection of said mobile node with an e-mail server in said communication network, said method comprising:
- a check step (102) for checking if the active interface is provided by a high speed or a low speed core network;
- a fetch step (108, 118) for requiring the server to transmit e-mails without their attachments in the case of a low speed network and with their attachments in the case of a high speed network.

2. A method according to claim 1 wherein:
- in the fetch step (108) requiring transmitting e-mails without their attachments, an e-mail which is transmitted without its attachment is referenced in a register;
- in the fetch step (118) requiring transmitting e-mails with their attachments, an e-mail which is referenced in the register is retransmitted with its attachment.

3. A method according to claim 1 or 2 wherein:
- in the check step (102) the active interface is checked by a dialog between an e-mail client and a mobile IP client.

4. A method according to claim 3 wherein the check step (102) is executed at least when a change of core network is detected for providing the active interface.

5. A system for downloading e-mails into a mobile node of a communication network comprising different core networks, one of them being available to provide an active interface for establishing a connection of said mobile node with an e-mail server in said communication network, said system comprising an e-mail client (51) arranged for checking if the active interface is provided by a high speed or a low speed core network, and for requiring the server to transmit e-mails without their attachments in the case of a low speed network and with their attachments in the case of a high speed network.

6. A system according to claim 5 comprising a register (56) for referencing an e-mail which is transmitted without its attachment so as to require a retransmission of said e-mail with its attachment when the core network is high speed network.

7. A system according to claim 5 or 6 comprising a mobile IP client (57) arranged for sending to the e-mail client (51) a speed value of a current core network providing the active interface in response to a request from the e-mail client for checking said active interface.

8. A system according to claim 7 wherein the mobile IP client (57) is arranged to send to the e-mail client (51) a signal detecting a change of core network for providing the active interface.

9. A program for an e-mail client to be implemented in a mobile node of a communication network comprising instructions for:
- checking if an active interface is provided by a high speed or a low speed core network of the communication network for establishing a connection of said mobile node with an e-mail server in said communication network;
- requiring the server to transmit e-mails without their attachments in the case of a low speed network and with their attachments in the case of a high speed network.

10. A program according to claim 9 comprising instructions for:
- referencing in a register an e-mails transmitted without its attachment;
- requiring a retransmission of said e-mail with its attachment when the active interface is provided by a high speed core network.
